# EUROPÄISCHE PATENTSCHRIFT

(11) **EP 1 769 967 B1**
(45) Veröffentlichungstag und Bekanntmachung des Hinweises auf die Patenterteilung: **27.02.2008**
(21) Anmeldenummer: 06015294.9
(22) Anmeldetag: 22.07.2006
(51) Int. Cl.: B60N 2/58, A47C 31/02

(54) **Befestigungssystem sowie zugehöriges Verankerungsteil für einen Sitz**
Fastening system as well as corresponding anchoring piece for a seat
Système d'attache ainsi que pièce d'ancrage correspondante pour siège

(30) Priorität: 29.09.2005 DE 102005048214
(43) Veröffentlichungstag der Anmeldung: 04.04.2007
(73) Patentinhaber: Gottlieb Binder GmbH & Co. KG, 71088 Holzgerlingen (DE)
(72) Erfinder: Poulakis, Konstantinos, 71157 Hildrizhausen (DE)
(74) Vertreter: Bartels & Partner

(56) Entgegenhaltungen:
- WO-A-97/17871
- WO-A-20/04028789
- DE-U1- 29 515 061
- DE-U1- 29 821 697
- US-A- 5 733 001
- US-B1- 6 560 827

## Beschreibung

Die Erfindung betrifft ein Befestigungssystem sowie zugehöriges Verankerungsteil für einen Sitz, insbesondere Fahrzeug- oder Fluggastsitz, zum Festlegen eines Polsterbezuges an einem Polsterschaumteil des Sitzes, mit
- mindestens einem als Profilleiste ausgebildeten Verankerungsteil, das mit dem Polsterbezug verbindbar ist, der hierfür an mindestens einem Verbindungsteil angreift, das zum Herstellen einer festen Verbindung in das zuordenbare Verankerungsteil eingreift, und
- mindestens einem Verhakungsteil, das in das Polsterschaumteil zumindest teilweise einschäumbar ist und das mit zwei gegenüberliegenden Verhakungselementen einen Klemmkanal begrenzt, in den das Verankerungsteil eingreifend mit seinen Verankerungselementen in untergreifende Anlage mit den zuordenbaren Verhakungselementen kommt.

Durch die EP 0 403 815 B1 ist ein Befestigungssystem bekannt mit einem Einzugstab als Verankerungsteil zur Profilformung von außenseitig durch einen Bezugsstoff als Polsterbezug abgedeckten Polstermaterialien bei Polstermöbeln und dergleichen gepolsterten Sitzteilen, bestehend aus einem einstückig stranggepreßten Profilstab aus Kunststoff, mit dem eine gesondert hergestellte Annähfahne als Verbindungsteil für seine Verbindung mit dem Bezugsstoff zwischen flachen Profilteilen fest verschweißt ist. Bei der bekannten Lösung weist der Profilstab ein zweischenkliges Querschnittsprofil auf, dessen beide Profilschenkel an ihrer Basis durch einen schmalen Verbindungssteg miteinander verbunden sind, und einen von diesem ausgehenden Aufnahmespalt für die Annähfahne begrenzen, indem ihre feste Verschweißung mit den angrenzenden Innenflächen der beiden Profilschenkel vorgenommen ist. Die bekannte Lösung ist dazu vorgesehen, den Einzug- oder Profilstab mit der Annähfahne unmittelbar im Polsterschaumteil eines Sitzes festzulegen, was mit einem erhöhten Montageaufwand einhergehen kann und in Abhängigkeit der eingesetzten Schäume ist ein ungewolltes Lösen des Befestigungssystems nicht ausgeschlossen, insbesondere wenn ein im Querschnitt elliptischer Profilstab als Verankerungsteil in eine zuordenbare Kavität im Polsterschaumteil eingreift.

Durch das DE 298 21 697 U1 ist ein Befestigungssystem zum Befestigen eines Polsterbezuges, insbesondere des Sitzbezuges eines Fahrzeugsitzes, an einem Schaumpolsterelement bekannt, das ein eingeschäumtes Einlegeteil aufweist, das mit Bügelbereichen einen verdickten, zum Einlegeteil weisenden Stirnkantenbereich eines Haltebandes als Verankerungsteil übergreift, an dem der Rand des Polsterbezuges über ein Verbindungsteil befestigt ist. Ein als Verhakungsteil dienender Kunststoffhalter, der das eingeschäumte Einlegeteil mit einem unteren Schenkel untergreift, weist zwei davon in Richtung auf das Halteband aufsteigende Schenkel als Verhakungselemente auf, die an ihren oberen Enden einwärts gekrümmte Haltebereiche aufweisen, zwischen denen ein vom durchbruchsfrei ausgebildeten Halteband durchgesetzter Längsspalt als Klemmkanal gebildet ist, dessen Breite geringer ist als die Dicke des verdickten Stirnkantenbereichs, wobei die Schenkel quer zum Klemmkanal elastisch ausgebildet sind und die einwärts gekrümmten Haltebereiche dienen der untergreifenden Anlage mit den zuordenbaren Verhakungselementen des als Halteband ausgebildeten Verankerungsteils.

Dieses bekannte gattungsbildende Befestigungssystem stellt über die eingeschäumten Verhakungsteile ein hohes Maß an Befestigungssicherheit sicher; allein durch das einzuschäumende Einlegeteil innerhalb des Profilkörpers des Verhakungsteils baut das gesamte Befestigungssystem bezogen auf die Einbauhöhe groß auf, was insbesondere dann nachteilig ist, wenn, was im Trend der heutigen Sitzentwicklung liegt, die eingesetzten Polsterschaumdicken für die Polsterschaumteile immer dünner ausgestaltet werden, so dass die bekannte Lösung insbesondere dort ihre Grenzen findet, wenn bei den nachgiebigen Polsterschaumteilen mit dünnen Wandbereichen der jeweilige Sitzbenutzer dann auf starren Teilen des Befestigungssystems aufsitzt, was als unangenehm empfunden wird.

Ausgehend von diesem Stand der Technik liegt der Erfindung die Aufgabe zugrunde, die bekannten Lösungen unter Beibehalten ihrer Vorteile, nämlich eine sichere Befestigung von Polsterbezugmaterialien an Pölsterschaumteilen sicherzustellen, dahingehend weiter zu verbessern, dass insbesondere die Einbauhöhe verringert ist bei gleichzeitig guter Montierbarkeit und niedrig anzusetzenden Herstellkosten. Eine dahingehende Aufgabe löst ein Sitzbefestigungssystem mit den Merkmalen des Patentanspruches 1 sowie ein hierfür eingesetztes Verankerungsteil gemäß der Merkmalsausgestaltung des Anspruchs 9.

Dadurch, dass gemäß dem kennzeichnenden Teil des Patentanspruches 1 das Verankerungsteil zwei Stegkörper aufweist, die einen Aufnahmeraum für die Aufnahme des Verbindungsteils begrenzen und die mit einem vorgebbaren Überstand über den eigentlichen Ankerkörper des Verankerungsteils vorstehen sowie im verhakten Festlegezustand aus dem Klemmkanal mit seinen Verhakungselementen in Richtung des festzulegenden Polsterbezuges überstehen, wird über die verlängerten Stegkörper das Verbindungsteil sicher in dem Aufnahmeraum des Verankerungsteils geführt und dort festgelegt. Aufgrund der dahingehenden Führung unter Bildung des Aufnahmeraumes läßt sich demgemäß das Verankerungsteil im Querschnitt gesehen geometrisch deutlich verkleinern, da es nicht mehr, wie im Stand der Technik aufgezeigt, gleichzeitig und ausschließlich das Verbindungsmittel - meist in Form der Annähfahne - aufzunehmen hat, sondern im wesentlichen seiner Verankerungsfunktion mittels der Verankerungselemente nachkommt. Dadurch, dass der freie Endbereich des Verbindungsteils zwischen den Stegkörpern geführt und gehalten ist, ist darüber hinaus sichergestellt, dass selbst bei einer seitlichen Krafteinleitung über das Verbindungsteil sich die Verankerungselemente nicht von den Verhakungselementen des zuordenbaren Verhakungsteils lösen können. Das klammerartige Verhakungsteil läßt sich sicher im Polsterschaumteil an den gewünschten Stellen befestigen, insbesondere teileinschäumen, so dass für das Verankerungsteil eine sichere Verhakungsmöglichkeit gegeben ist, die einer reinen Verhakung im Schaummaterial mit geringeren Haltekräften vorzuziehen ist.

Das für das Befestigungssystem eingesetzte Verankerungsteil läßt sich vorzugsweise in einer Bauhöhe < 10mm ausbilden, vorzugsweise mit einer Bauhöhe von ca. 5 bis 7 mm, insbesondere 6,5 mm, so dass sich das erfindungsgemäße Befestigungssystem ohne weiteres auch für noch so dünnwandige Polsterschaumteile einsetzen läßt, ohne dass dies den Sitzkomfort beeinträchtigt. Das erfindungsgemäße Befestigungssystem läßt sich schnell herstellen und kostengünstig montieren, so dass insoweit der Herstellaufwand und die Herstellkosten reduziert sind. Insbesondere ist das Verankerungsteil in der Art einer Pfeilspitze ausgebildet, was den Eingriff in das jeweils zuordenbare Verhakungsteil erleichtert und die sich am Außenumfang des jeweiligen Stegkörpers abstützenden Verhakungselemente des Verhakungsteils sind dergestalt definiert geführt, so dass ein ungewolltes Aufspreizen der Verhakungselemente und Öffnen des Klemmkanals ausgeschlossen ist.

Da die beiden Stegkörper sich vorzugsweise senkrecht aufstehend auf der Oberseite des Ankerkörpers mit den beiden Verankerungselementen erstrecken, ist das Verbindungsteil in Richtung des Polsters im Aufnahmeraum geführt, so dass für das Verbindungsteil schädigende Knickstellen, insbesondere im Einlaufbereich zum Aufnahmeraum, mit Sicherheit vermieden sind. Zur Anbindung des Verbindungsteils an das Verankerungsteil hat sich als besonders vorteilhaft ein sog. Intrusionsverfahren erwiesen, wie es für ein Kunststoff-Extrusionsprofil beispielhaft in der DE 103 03 358 A1 aufgezeigt ist. Bei dem angegebenen Intrusionsverfahren werden die Schmelztemperaturbereiche der eingesetzten Kunststoffmaterialien von Profilkörper als Verankerungsteil und Annähfahne als Verbindungsteil derart unterschiedlich gewählt, dass das eine Kunststoffmaterial beim Erzeugen der Verbindung unter thermischer Einwirkung im wesentlichen formstabil bleibt, wohingegen das andere Kunststoffmaterial in Ausnehmungen, gebildet von dem einen Kunststoffmaterial, eindringt und beim Erkalten in den Ausnehmungen verfestigt wird. Hierdurch lassen sich hochfeste Verbindungen erreichen im Gegensatz zu bekannten Schweiß- und/oder Klebeverbindungsverfahren.

Da das Befestigungssystem sehr stark miniaturisiert ist, sind für das Verankerungsteil sehr steife und hochstabile Kunststoffmaterialien einzusetzen, wobei vorzugsweise Acrylnitril-Polybutadien-Styrolpfropfpolymere (ABS) bevorzugt eingesetzt werden, wobei für die Ausgestaltung des Verbindungsteils ein üblicher Polyesterwerkstoff od. dgl. einsetzbar ist.

Weitere vorteilhafte Ausführungsformen des erfindungsgemäßen Befestigungssystems sowie des hierfür eingesetzten Verankerungsteils sind Gegenstand der sonstigen Unteransprüche.

Im folgenden wird das erfindungsgemäße Befestigungssystem anhand eines Ausführungsbeispiels nach der Zeichnung näher erläutert. Dabei zeigen in prinzipieller und nicht maßstäblicher Darstellung die
- Fig.1: eine perspektivische Ansicht des noch nicht zusammengesetzten Befestigungssystems;
- Fig.2: eine stirnseitige Draufsicht auf das Befestigungssystem nach der Fig.1 bei hergestellter Verbindung.

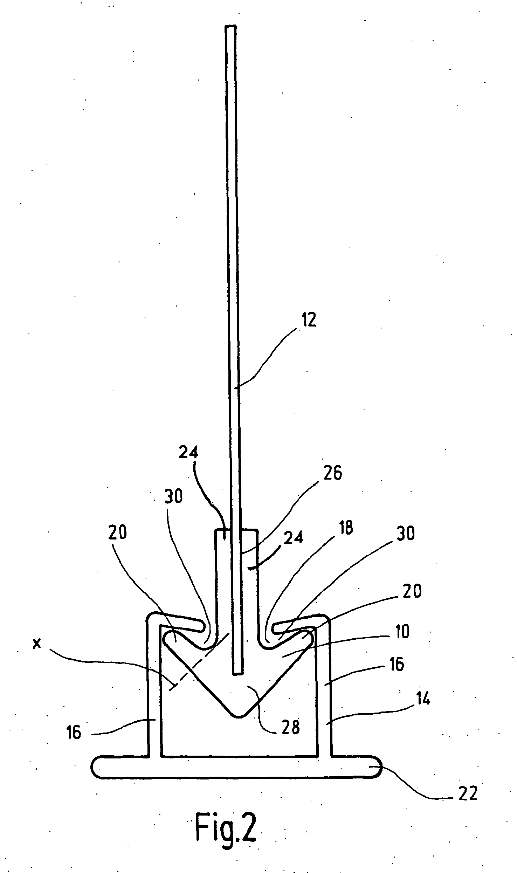

Das erfindungsgemäße Befestigungssystem ist für einen Sitz einsetzbar, insbesondere für einen Fahrzeug- oder Fluggastsitz, zum Festlegen eines nicht näher dargestellten Polsterbezuges an einem Polsterschaumteil des Sitzes. Hierfür weist das Befestigungssystem ein als Profilleiste ausgebildetes Verankerungsteil 10 auf, das mit einem nicht näher dargestellten Polsterbezug, beispielsweise über Annähen, verbindbar ist, wobei der dahingehende Polsterbezug am oberen Ende eines Verbindungsteils 12 angreift, das zum Herstellen einer festen Verbindung in das zuordenbare Verankerungsteil 10 eingreift. Ferner ist ein Verhakungsteil 14 vorgesehen, das in das nicht näher dargestellte Polsterschaumteil zumindest teilweise einschäumbar ist und das mit zwei gegenüberliegenden Verhakungselementen 16, die im wesentlichen gleich aufgebaut sind, einen nach oben hin offenen Klemmkanal 18 begrenzen, in den das Verankerungsteil 10 von oben her eingreifend mit seinen beiden gegenüberliegenden Verankerungselementen 20 in untergreifende Anlage mit den zuordenbaren Verhakungselementen 16 kommt (vgl. Fig.2).

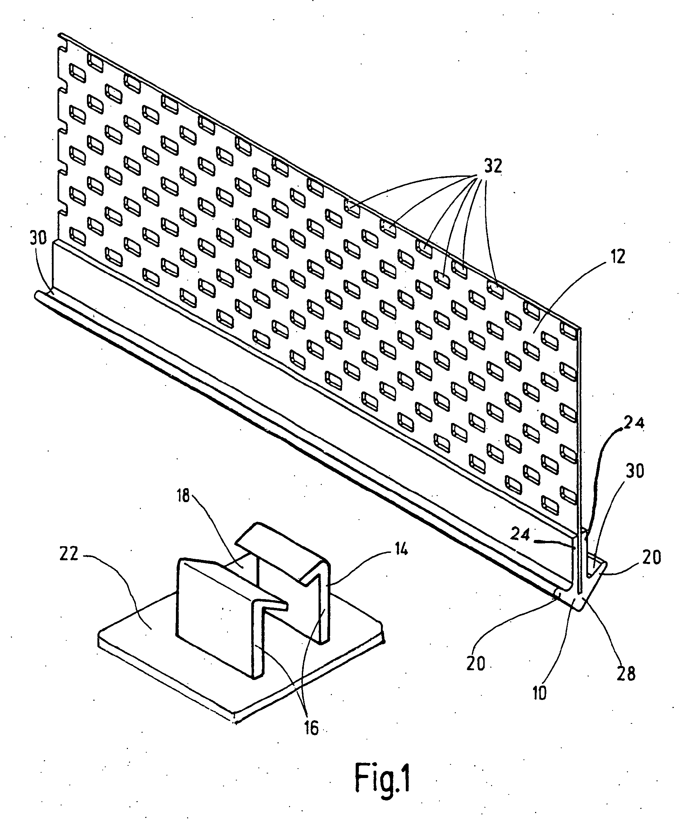

Die Verhakungsteile 14 können gemäß der Darstellung nach der Fig.1 für eine linienförmig ausgebildete Profilleiste als Verankerungsteil 10 mehrfach vorhanden sein und insbesondere in vorgebbaren Abständen zueinander in Linie die gewünschte Verhakung mit dem Verankerungsteil 10 vornehmen. Zur Anpassung an spezielle Konturen oder Rundungen am Sitz sind dann die dahingehenden Profilkörper aus einem biegbaren Kunststoffmaterial ausgebildet, um sich insoweit an geänderte Konturverläufe anpassen zu können. Die beiden Verhakungselemente 16 sind in Blickrichtung auf die Figuren bodenseitig mit einer verbreiterten Einschäumplatte 22 versehen, um dergestalt die Schaumanbindung zu erleichtern. Von der dahingehenden Einschäumplatte 22 aus erstrecken sich die beiden Verhakungselemente 16 stegartig nach oben und sind zu ihrem freien Ende hin abgeknickt, um dergestalt eine Unterhakung für die Verhakungselemente 16 des Verankerungsteils 10 sicherstellen zu können. Die Querschnitte für die Verhakungselemente 16 sind jedenfalls derart gewählt, dass beim Eindringen des pfeilartigen Verankerungsteils 10 diese entsprechend nachgeben können, insbesondere sich voneinander abspreizen, wobei nach Eindringen des Verankerungsteils 10 über den Klemmkanal 18 in das Verhakungsteil 14 sich die beiden Verhakungselemente 16 elastisch rückstellen, um dergestalt eine verläßliche Verhakung garantieren zu können.

Das Verankerungsteil 10 weist an seiner Oberseite zwei parallel zueinander verlaufende flächige Stegkörper 24 auf, die einen Aufnahmeraum 26 (vgl. Fig.2) für die Aufnahme des Verbindungsteils 12 begrenzen und die mit einem vorgebbaren Überstand über den eigentlichen Ankerkörper 28 des Verankerungsteils 10 vorstehen sowie im verhakten Festlegezustand aus dem Klemmkanal 18 in Richtung des festzulegenden Polsterbezuges überstehen. Die in den Figuren dargestellten Größenordnungen gehen auf eine mehrfache Vergrößerung des Befestigungssystems zurück, das dem Grunde nach als Miniaturbefestigungssystem ausgebildet ist, wobei die Höhe des gesamten Verankerungsteils 10 einschließlich der beiden Stegkörper 24 kleiner als 10 mm ist, insbesondere nur 6,5 mm beträgt. Ferner ist vorgesehen, dass die Höhe der vorstehenden Stegkörper 24 größer oder gleich ist dem horizontalen Abstand zwischen einem der Stegkörper 24 und dem äußersten Ende des benachbart angeordneten Verankerungselementes 20. Die Höhe des Aufnahmeraumes 26 zwischen Paaren an Stegkörpern 24 ist im wesentlichen gleich dem senkrechten Abstand zwischen den beiden äußersten Enden eines Paares an Verankerungselementen 20. Vorzugsweise beträgt der Abstand zwischen den beiden Enden eines Paares an Verankerungselementen 20 etwa 5 mm und die Breite der beiden Stegkörper 24 mit Aufnahmeraum 26 beläuft sich auf ca. 1,4 mm. Die Höhe des Verbindungsteils 12 läßt sich entsprechend an die Dicke des eingesetzten Schaumkörpermaterials für den Sitz entsprechend vorgeben und die Größenordnungen für das Verhakungsteil 14 sind derart gewählt, dass jedenfalls ein sicherer Ein- und Untergriff für das Verankerungsteil 10 mit seinem Ankerkörper 28 gewährleistet ist.

Um eine gute Stabilität sicherzustellen, ist darüber hinaus vorgesehen, dass die Breite des jeweiligen Stegkörpers 24 im wesentlichen doppelt so groß ist wie die in Fig.2 gezeigte Breite des Aufnahmeraumes 26. Ferner zeigen die Figuren auf, dass der Ankerkörper 28 in der Art einer Pfeilspitze ausgebildet ist mit beidseits nach hinten weisenden Verankerungselementen 20, die zwischen sich und dem jeweils zuordenbaren Stegkörper 24 einen Eingriffsraum 30 begrenzen für den Eingriff der zuordenbaren Verhakungselemente 16. Insbesondere sind die beiden Verankerungselemente 20 gegenüber der Horizontalen um einen Winkel von etwa 45° geneigt und insoweit rückgestellt. Ferner kommt es der Stabilität zugute, wenn die Gesamtbreite zweier Stegkörper 24 mit Aufnahmeraum 28 im wesentlichen der Breite des Verankerungselementes 20 entspricht gemessen längs einer 45°-Linie X, die an der tiefsten Stelle des Eingriffsraums 30 ausmündet (vgl. Fig.2). Dergestalt entsteht im Querschnitt gesehen ein robust aufbauendes Kastensystem mit günstig angeordneten Krafteinleitungsräumen, beispielsweise in Form der Eingriffsräume 30. Hierzu trägt auch der quadratische Aufbau der Platte 22 mit bei und dass die Länge eines jeden Verhakungsteils 14 seiner Höhe in senkrechter Richtung (vgl. Fig.1) entspricht. Um einen ungestörten Eingriff des Verankerungsteils 10 in das Verhakungsteil 14 zu gewährleisten, ist vorgesehen, dass die Höhe des Klemmkanals 18 zwischen den Paaren an Verhakungselementen 16 bis zur Oberseite der Einschäumungsplatte 22 jedenfalls geringfügig höher gewählt ist als die mögliche Eingreifhöhe des Ankerkörpers 28 im Klemmkanal 18.

Um eine gute Anbindung des Verbindungsteils 12 im Aufnahmeraum 26 zwischen den beiden Stegkörpern 24 des Verankerungsteils 10 zu erreichen, wird ein sog. Intrusionsverfahren eingesetzt, wie es detailliert in der DE 103 03 358 A1 aufgezeigt ist. Das dort aufgezeigte Verfahren ist insbesondere dadurch charakterisiert, dass die Schmelztemperaturbereiche der eingesetzten Kunststoffmaterialien von Verankerungsteil 10 und Verbindungsteil 12 derart unterschiedlich gewählt werden, dass das eine Kunststoffmaterial beim Erzeugen der Verbindung unter thermischer Einwirkung im wesentlichen formstabil bleibt, wohingegen das andere Kunststoffmaterial in Ausnehmungen, gebildet von dem einen Kunststoffmaterial, eindringt und bei Erkalten in den Ausnehmungen verfestigt wird. Derart dringt ein Teil des aufgeschmolzenen bzw. plastifizierbaren Kunststoffmaterials in Hohlräume (Ausnehmungen) des anderen Kunststoffmaterials ein, um sich dort unter Herstellen einer formschlüssigen Verbindung zu verfestigen, wobei vorzugsweise das Kunststoffmaterial mit den Ausnehmungen aufgrund des anders liegenden Schmelztemperaturbereichs in seiner Gefügeanordnung unberührt bleibt. Es kommt mithin bei der realisierten Intrusionslösung nicht zu Schweiß- oder Klebstoffverbindungen, wie sie im Stand der Technik aufgezeigt sind, sondern vielmehr wird in der Art eines Eingieß- oder Intrusionsverfahrens der Kunststoffwerkstoffe ein Teil der Verbindung in den Kunststoffwerkstoff des anderen Verbindungsteils formschlüssig eingebettet und dergestalt festgehalten.

Die angesprochenen Ausnehmungen sind insoweit durch den Aufnahmeraum 26 des Verankerungsteils 10 gebildet als auch durch Ausnehmungen 32 im Verbindungsteil 12 selbst, soweit diese in den Aufnahmeraum 26 eingreifen, wobei die dahingehenden Ausnehmungen 32 des Verbindungsteils 12 vorzugsweise durch die Gewebeöffnungsstrukturen eines Gewebes oder eines Gestrickes gebildet sind, das insoweit das Verbindungsteil 12 bildet, wobei die dahingehenden Ausnehmungen 32 auch eine günstige Anbindungsstelle für den nicht näher dargestellten Polsterbezug bilden, der insoweit mit dem oberen Ende des Verbindungsteils 12 zu vernähen, verkleben, verclippen oder zu verschweißen ist. Das erfindungsgemäße Befestigungssystem läßt sich bezogen auf das Verankerungsteil 10 sehr rasch herstellen, indem gleichzeitig ein Extrusionswerkzeug das Verankerungsteil 10 ausbildet, und in das freie Ende des Aufnahmeraumes 26 das Verbindungsteil 12 einläuft, das dann dergestalt unmittelbar im Rahmen der beschriebenen Intrusion eine feste Verbindung mit dem Verankerungsteil 10 eingeht.

Im Zuge der Ausbildung des erfindungsgemäßen Befestigungssystems hat es sich von der Stabilität her als günstig erwiesen, das Verankerungsteil 10 aus einem extrudierbaren Kunststoff, insbesondere in Form von Polyester, Polysterol, Polycarbonat sowie Acrylnitril-Polybutadien-Styrolpfropfpolymer (ABS) auszubilden, die sich für das beschriebene Anwendungsgebiet einschließlich ihrer Mischung miteinander gut eignen. Das in Form eines Gestricke ausgebildete Verbindungsteil 12 wird bevorzugt aus einem Polyesterfasermaterial aufgebaut.

## Patentansprüche

1. Befestigungssystem für einen Sitz, insbesondere Fahrzeug- oder Fluggastsitz, zum Festlegen eines Polsterbezuges an einem Polsterschaumteil des Sitzes, mit
- mindestens einem als Profilleiste ausgebildeten Verankerungsteil (10), das mit dem Polsterbezug verbindbar ist, der hierfür an mindestens einem Verbindungsteil (12) angreift, das zum Herstellen einer festen Verbindung in das zuordenbare Verankerungsteil (10) eingreift, und
- mindestens ein Verhakungsteil (14), das in das Polsterschaumteil zumindest teilweise einschäumbar ist und das mit zwei gegenüberliegenden Verhakungselementen (16) einen Klemmkanal (18) begrenzt, in den das Verankerungsteil (10) eingreifend mit seinen Verankerungselementen (20) in untergreifende Anlage mit den zuordenbaren Verhakungselementen (16) kommt,
**dadurch gekennzeichnet, dass** das Verankerungsteil (10) zwei Stegkörper (24) aufweist, die einen Aufnahmeraum (26) für die Aufnahme des Verbindungsteils (12) begrenzen und die mit einem vorgebbaren Überstand über den eigentlichen Ankerkörper (28) des Verankerungsteils (10) vorstehen sowie im verhakten Festlegezustand aus dem Klemmkanal (18) mit seinen Verhakungselementen (16) in Richtung des festzulegenden Polsterbezuges überstehen.

2. Befestigungssystem nach Anspruch 1, **dadurch gekennzeichnet, dass** die Höhe der vorstehenden Stegkörper (24) größer oder gleich ist dem senkrechten Abstand zwischen einem der Stegkörper (24) und dem äußersten Ende des benachbart angeordneten Verankerungselementes (20).

3. Befestigungssystem nach Anspruch 1 oder 2, **dadurch gekennzeichnet, dass** die Höhe des Aufnahmeraumes (20) zwischen Paaren an Stegkörpern (24) im wesentlichen gleich ist dem senkrechten Abstand zwischen den beiden äußersten Enden eines Paares an Verankerungselementen (20).

4. Befestigungssystem nach einem der Ansprüche 1 bis 3, **dadurch gekennzeichnet, dass** die Breite des jeweiligen Stegkörpers (24) im wesentlichen doppelt so groß ist wie die Breite des Aufnahmeraumes (26).

5. Befestigungssystem nach einem der Ansprüche 1 bis 4, **dadurch gekennzeichnet, dass** der Ankerkörper (28) in der Art einer Pfeilspitze ausgebildet ist mit beidseits nach hinten weisenden Verankerungselementen (20), die zwischen sich und dem jeweils zuordenbaren Stegkörper (24) einen Eingriffsraum (30) begrenzen für den Eingriff der Verhakungselemente (16).

6. Befestigungssystem nach Anspruch 5, **dadurch gekennzeichnet, dass** die Gesamtbreite zweier Stegkörper (24) mit Aufnahmeraum (28) im wesentlichen der Breite des Verankerungselementes (20) entspricht gemessen längs einer 45°-Linie X, die an der tiefsten Stelle des Eingriffsraumes (30) ausmündet.

7. Befestigungssystem nach einem der Ansprüche 1 bis 6, **dadurch gekennzeichnet, dass** die Höhe des Klemmkanals (18) zwischen den Paaren an Verhakungselementen (16) geringfügig höher gewählt ist als die Eingriffshöhe des Ankerkörpers (28) im Klemmkanal (18).

8. Befestigungssystem nach einem der Ansprüche 1 bis 7, **dadurch gekennzeichnet, dass** das Verankerungsteil (10) aus einem extrudierbaren Kunststoff, insbesondere in Form von Polyester, Polysterol, Polycarbonat, Acrylnitril-Polybutadien-Styrolpfropfpolymere (ABS) oder Mischungen hiervon besteht.

9. Verankerungsteil für ein Befestigungssystem nach einem der Ansprüche 1 bis 8, **dadurch gekennzeichnet, dass** es zwei Stegkörper (24) aufweist, die senkrecht auf einem Ankerkörper (28) des Verankerungsteils vorstehen und die einen Aufnahmeraum (26) für die Aufnahme eines Verbindungsteils (12) begrenzen, und die mit einem vorgebbaren Überstand über den Ankerkörper (28) vorstehen und dass das Verbindungsteil (12) in der Art einer flexiblen Festlegeplatte, eines flächigen Gewirkes oder Gestrickes aus dem Aufnahmeraum (26) vorsteht.

10. Verankerungsteil nach Anspruch 9, **dadurch gekennzeichnet, dass** das Verbindungsteil (12) aus einem Kunststoffmaterial, insbesondere Polyester, besteht, dessen Schmelzpunkt höher ist als der Schmelzpunkt des Ankerkörpers (28).

## Claims

1. Fitting system for a seat, in particular a vehicle or an airplane passenger seat, for fitting an upholstery cover to an upholstery foam part of the seat, with
- at least one anchoring part (10) designed as a profile rail, to be connected with the upholstery cover, the same engaging at least one connection part (12) for this, which in turn engages the associated anchoring part (10) for producing a firm connection, and
- at least one hook-up part (14), the same to be foamed into the upholstery foam part at least in part, and delimiting a clamping channel (18) together with two opposing hook-up elements (16), in which the anchoring part (10) comes into rear abutting engagement with the associated hook-up elements (16) by means of the anchoring part with its anchoring elements (20).
**characterised in that** the anchoring part (10) comprises two bridge bodies (24) delimiting a receiving space (26) for receiving the connection part (12), and which project over the actual anchor body (28) of the anchoring part (10) with a pre-determinable projection, as well as projecting from the clamping channel (18) with its hook-up elements (16) in the direction of the upholstery cover to be fitted in the hooked-up fitted condition.

2. Fitting system according to Claim 1, **characterised in that** the height of the bridge bodies (24) described above is greater than or identical to the vertical distance between one of the bridge bodies (24) and the outermost end of the adjacently located anchoring element (20).

3. Fitting system according to Claim 1 or 2, **characterised in that** the height of the receiving space (20) between pairs of bridge bodies (24) is substantially identical to the vertical distance between the two outermost ends of a pair of anchoring elements (20).

4. Fitting system according to one of the Claims 1 to 3, **characterised in that** the width of the relevant bridge body (24) is substantially twice that of the width of the receiving space (26).

5. Fitting system according to one of the Claims 1 to 4, **characterised in that** the anchoring body (28) is formed in the way of an arrow tip with rear facing anchoring elements (20) on both sides, which delimit an engagement space (30) for engaging the associated hook-up elements (16) between themselves and the relevant associated bridge body (24).

6. Fitting system according to Claim 5, **characterised in that** the total width of two bridge bodies (24) with the receiving space (28) is substantially identical to the width of the anchoring element (20) when measured along a 45° line X, which opens into engagement space (30) at the lowest point of the same.

7. Fitting system according to one of the Claims 1 to 6, **characterised in that** the height of the clamping channel (18) between the pairs of hook-up elements (16) is selected to be a little higher than the engagement height of the anchoring body (28) in the clamping channel (18).

8. Fitting system according to one of the Claims 1 to 7, **characterised in that** the anchoring part (10) consists of an extrudable plastic, in particular in the form of polyester, polystyrol, polycarbonate, acrylic nitrile polybutadiene styrol graft copolymer (ABS) or mixtures of the same.

9. Anchoring part for a fitting system according to one of the Claims 1 to 8, **characterised in that** the same comprises two bridge bodies (24) that project vertically from an anchoring body (28) of the anchoring part, and which delimit a receiving space (26) for receiving a connection part (12), and which project with a pre-determined projection over the anchoring body (28), and **in that** the connection part (12) projects from the receiving space (26) in the way of a flexible fitting plate, or a flat textile or mesh.

10. Anchoring part according to Claim 9, **characterised in that** the connection part (12) consists of a plastic material, in particular polyester, the melting point of which is higher than the melting point of the anchoring body (28).

## Revendications

1. Système de fixation pour un siège, notamment pour un siège passager de véhicule automobile ou d'avion, pour fixer un revêtement de rembourrage sur une partie en mousse de rembourrage du siège, comprenant :
- au moins une partie (10) d'ancrage constituée en réglette profilée, pouvant être reliée au revêtement du rembourrage et attaquant à cet effet au moins une partie (12) de liaison, laquelle, pour ménager une liaison solide, pénètre dans la partie (10) d'ancrage qui peut lui être associée, et
- au moins une partie (14) d'accrochage, qui peut être introduite par moussage au moins en partie dans la partie en mousse de rembourrage et qui délimite par deux éléments (16) d'accrochage opposés un canal (18) de serrage, dans lequel la partie (10) d'ancrage vient, en pénétrant par ses éléments (20) d'ancrage, en contact d'accrochage par le bas avec les éléments (16) pouvant être associés,
**caractérisé en ce que** la partie (10) d'ancrage a deux branches (24) qui délimitent un espace (26) de réception de la partie (12) de liaison et qui dépassent, d'un dépassement pouvant être prescrit, de la pièce (28) d'ancrage proprement dite de la partie (10) d'ancrage, tout en dépassant, à l'état accroché du canal (18) de serrage par ses éléments (16) d'accrochage en direction du revêtement de rembourrage à fixer.

2. Système de fixation selon la revendication 1, **caractérisé en ce que** la hauteur des branches (24) en saillie est supérieure ou égale à la distance verticale entre l'une des branches (24) et l'extrémité la plus à l'extérieure de l'élément (20) d'accrochage voisin.

3. Système suivant la revendication 1 ou 2, **caractérisé en ce que** la hauteur de l'espace (20) de réception entre des paires de branches (24) est sensiblement égale à la distance verticale entre les deux extrémités les plus à l'extérieur d'une paire d'éléments (20) d'ancrage.

4. Système suivant l'une des revendications 1 à 3, **caractérisé en ce que** la largeur de la branche (24) respective est sensiblement deux fois plus grande que la largeur de l'espace (26) de réception.

5. Système suivant l'une des revendications 1 à 4, **caractérisé en ce que** la pièce (28) d'ancrage est constituée à la manière d'une pointe de flèche ayant de part et d'autre des éléments (20) d'ancrage tournés vers l'arrière et délimitant entre eux et la branche (24)pouvant leur être associée respectivement un espace (30) de pénétration des éléments (16) d'accrochage.

6. Système suivant la revendication 5, **caractérisé en ce que** la largeur de deux branches (24) avec l'espace (28) de réception correspond sensiblement à la largeur de l'élément (20) d'ancrage mesurée le long d'une ligne X à 45°, qui arrive au point le plus bas de l'espace (30) de pénétration.

7. Système suivant l'une des revendications 1 à 6, **caractérisé en ce que** la hauteur du canal (18) de serrage entre les paires d'éléments (16) d'accrochage est choisie légèrement plus grande que la hauteur de pénétration de la pièce (28) d'ancrage dans le canal (18) de serrage.

8. Système suivant l'une des revendications 1 à 7, **caractérisé en ce que** la partie (10) d'ancrage est en une matière plastique pouvant être extrudée, en étant notamment sous la forme de polyester, de polystyrène, de polycarbonate, de polymère greffé d'acrylonitrile, de polybutadiène et de styrène (ABS) ou de leurs mélanges.

9. Parie d'ancrage pour un système de fixation suivant l'une des revendications 1 à 8, **caractérisée en ce qu'**elle a deux branches (24) qui font saillie verticalement sur une pièce (28) d'ancrage de la partie d'ancrage, qui délimitent un espace (26) de réception d'une partie (12) de liaison et qui dépassent, d'un dépassement pouvant être prescrit, de la pièce (28) d'ancrage et **en ce que** la partie (12 de liaison fait saillie à la manière d'une plaque de fixation souple d'un tissu plat ou d'un tricot de l'espace (26) de réception.

10. Partie d'ancrage suivant la revendication 9, **caractérisée en ce que** la partie (12) de liaison est en une matière plastique ,notamment en polyester, dont le point de fusion est plus haut que le point de fusion de la pièce (28) d'ancrage.
